# DEMANDE DE BREVET EUROPEEN

(11) **EP 4 386 717 A1**
(43) Date de publication de la demande: **19.06.2024**
(21) Numéro de dépôt: 23214105.1
(22) Date de dépôt: 04.12.2023
(51) Int. Cl.: G08G 5/04, G08G 5/06, G01S 13/934

(54) **PROCÉDÉ ET SYSTÈME D AIDE À L ÉVITEMENT D'UNE EXCURSION PAR UN AÉRONEF D'UNE VOIE DE CIRCULATION D'UN AÉRODROME**

(30) Priorité: 16.12.2022 FR 2213617
(71) Demandeur: Airbus Operations SAS, 31060 Toulouse (FR)
(72) Inventeur: CLAUDEL, Emilie, 31060 TOULOUSE (FR); SENTISSI, Isabelle, 31060 TOULOUSE (FR); FAURE, Louise, 31060 TOULOUSE (FR)
(74) Mandataire: Gevers & Orès

(57) **Abrégé**

- Le système (1) comprend une unité pour surveiller l'aérodrome (2) de manière à pouvoir détecter, par l'intermédiaire d'une détection optique, un élément caractéristique (C1 à C9) d'une voie de circulation (3, 4, 5, 6), pour déterminer une position relative courante d'un train d'atterrissage (9, 10) de l'aéronef (AC) par rapport à l'élément caractéristique (C1 à C9) détecté et pour détecter une excursion future de la voie de circulation (3, 4, 5, 6) de l'aérodrome (2) par l'aéronef (AC) en fonction au moins de cette position relative courante, et une unité pour aider à mettre en oeuvre une action destinée à aider à éviter ladite excursion future, le système (1) étant ainsi configuré pour apporter une aide au pilote de l'aéronef en améliorant sa sensibilisation concernant une excursion potentielle, au moyen de messages d'alerte et/ou d'aide à la navigation au sol, et en prévoyant une protection en dernier ressort via un freinage automatique.

## Description

### Domaine technique

La présente invention concerne un procédé et un système d'aide à l'évitement d'une excursion (longitudinale ou latérale) d'une voie de circulation d'un aérodrome par un aéronef roulant sur cette voie de circulation.

### Etat de la technique

Dans le cadre de la présente invention, on entend :
- par voie de circulation de l'aérodrome, une piste (destinée à l'atterrissage et/ou au décollage d'aéronefs) ou une autre voie de roulement de l'aérodrome qui est notamment utilisée par les aéronefs pour effectuer le trajet entre une piste et une place de stationnement ; et
- par excursion d'une voie de circulation de l'aérodrome, pour un aéronef, par exemple un avion de transport, roulant sur la voie de circulation, une situation où sa trajectoire s'approche trop d'une ligne de bord ou, en d'autres termes, s'éloigne trop d'une ligne centrale (ou axe central), comme précisé ci-dessous.

Une telle excursion, en plus d'être généralement dangereuse pour le roulement de l'aéronef, exposerait l'aéronef à des risques de collisions, notamment avec d'autres aéronefs, des véhicules, des équipements au sol ou des infrastructures aéroportuaires et/ou pourrait générer des dommages sur l'aéronef et/ou des perturbations de l'opération que l'aéronef est en train de réaliser.

Aussi, il pourrait être utile de disposer d'une solution permettant d'aider un pilote d'un aéronef à empêcher la survenue d'une telle excursion d'une voie de circulation.

### Exposé de l'invention

Un objectif de la présente invention est d'apporter une telle solution. Pour ce faire, la présente invention concerne un procédé d'aide à l'évitement d'une excursion (longitudinale ou latérale) d'une voie de circulation d'un aérodrome par un aéronef roulant sur la voie de circulation.

Selon l'invention, le procédé comporte au moins les étapes suivantes :
- une étape de surveillance, mise en oeuvre par une unité de surveillance, au moins pour surveiller l'aérodrome de manière à pouvoir détecter, par l'intermédiaire de préférence d'une détection optique, par exemple une détection visuelle, au moins un élément caractéristique d'une voie de circulation, pour déterminer une position relative courante d'au moins un train d'atterrissage de l'aéronef par rapport à l'élément caractéristique détecté, et pour détecter une excursion future de ladite voie de circulation de l'aérodrome par l'aéronef en fonction au moins de cette position relative courante et de paramètres (notamment la vitesse) de l'aéronef ; et
- une étape d'aide à l'évitement, mise en oeuvre par au moins une unité d'aide à l'évitement, au moins pour, dans le cas d'une excursion future détectée à l'étape de surveillance, mettre en oeuvre au moins une action destinée à aider à éviter (empêcher) ladite excursion future.

Le procédé est mis en oeuvre pendant une phase de roulement au sol (« taxiing ») et/ou pendant une phase de stationnement (« parking »), comme précisé ci-dessous.

Ainsi, ledit procédé est en mesure, pendant la phase de roulement au sol et/ou pendant la phase de stationnement, d'une part de détecter (à l'aide d'une détection optique) une excursion future (longitudinale ou latérale), c'est-à-dire une excursion potentielle, d'une voie de circulation d'un aérodrome, par l'aéronef sur lequel est mis en oeuvre ledit procédé, et d'autre part d'apporter une aide au pilote de l'aéronef pour éviter l'excursion d'une telle situation, et ceci en particulier, comme précisé ci-dessous, en améliorant la sensibilisation du pilote concernant la situation effective (par des messages d'alerte ou d'aide à la navigation au sol) et/ou en prévoyant une protection en dernier ressort (en mettant en oeuvre un freinage automatique de l'aéronef).

La présente invention peut donc s'appliquer à la fois à une phase de roulement au sol (« taxiing » en anglais) et à une phase de stationnement (« parking » en anglais). Plus précisément :
- pendant une phase de roulement au sol de l'aéronef, une excursion correspond à une approche excessive d'une ligne de bord ou même d'une sortie de l'aire pourvue d'un revêtement sur laquelle il roule, et ceci en s'écartant latéralement (excursion latérale) ou en dépassant l'aire (excursion longitudinale) ; et/ou
- pendant une phase de stationnement de l'aéronef, une excursion correspond à un éloignement excessif d'une ligne centrale (ou axe central) ou d'un marquage d'arrêt qui représente un marquage usuel au sol au niveau duquel doit être positionné un élément de l'aéronef, par exemple son train d'atterrissage avant, lorsque l'aéronef est en position de stationnement.

Dans le cadre de la présente invention, on entend par « détection optique » une détection mise en oeuvre par des moyens et des capteurs optoélectroniques consistant à former des images à partir de la capture d'un rayonnement électromagnétique, par exemple infrarouge ou visible. De préférence, la détection optique est une détection dite visuelle, pour laquelle un rayonnement visible est détecté.

De façon avantageuse, l'étape de surveillance met en oeuvre une détection optique et comprend, pour la mise en oeuvre de la détection optique :
- une sous-étape de prise d'images, mise en oeuvre par un dispositif de prise d'images, pour prendre des images (par exemple dans le visible ou dans l'infrarouge) de l'environnement extérieur de l'aéronef ;
- une sous-étape de traitement d'au moins certaines des images prises à ladite sous-étape de prise d'images de manière à détecter un élément caractéristique d'une voie de circulation, lorsque l'élément caractéristique est représenté sur l'une des images traitées.

Avantageusement, la sous-étape de traitement d'images met en oeuvre au moins l'une des techniques suivantes :
- une technique utilisant de l'intelligence artificielle ;
- une technique de traitement d'images.

Dans un mode de réalisation particulier, l'étape de surveillance comprend une sous-étape de traitement de données mise en oeuvre au moins pour déterminer la position relative courante entre un élément caractéristique, dont la représentation a été détectée dans l'image, et le train d'atterrissage de l'aéronef, en prenant en compte des caractéristiques (position, orientation, calibrage) du dispositif de prise d'images utilisé à la sous-étape de prise d'images.

Par ailleurs, de préférence, ledit ou lesdits éléments caractéristiques comprennent au moins une limite entre une zone pourvue d'un revêtement pour la circulation sur une voie de circulation et une zone dépourvue d'un revêtement pour la circulation.

Dans un mode de réalisation préféré, l'étape de surveillance utilise un radar pour détecter la limite entre la zone pourvue du revêtement pour la circulation sur la voie de circulation et la zone dépourvue d'un revêtement pour la circulation.

En outre, dans un autre mode de réalisation, l'étape de surveillance met en oeuvre à la fois une détection optique et une détection par radar.

Par ailleurs, avantageusement, l'étape de surveillance détermine une position dite absolue de l'aéronef à l'aide d'informations issues d'au moins l'un des éléments suivants de l'aéronef : un système de référence inertielle, un système de positionnement par satellites, un odomètre, un tachymètre, un capteur optoélectronique.

Par ailleurs, avantageusement, ledit ou lesdits éléments caractéristiques comprennent au moins l'un des éléments suivants :
- une ligne centrale d'une voie de circulation ;
- une ligne de bord d'une voie de circulation ;
- un marquage d'arrêt.

Dans un mode de réalisation particulier, l'étape de surveillance détermine une position relative courante consolidée d'un train d'atterrissage de l'aéronef, en utilisant au moins deux informations de position (position(s) relative(s) et/ou position(s) absolue(s)).

Par ailleurs, de façon avantageuse, l'étape de surveillance comprend une étape de traitement de données mise en oeuvre au moins pour déterminer au moins une enveloppe d'alerte (courante) dépendant au moins d'une position relative d'un train d'atterrissage de l'aéronef et de paramètres de l'aéronef, et pour détecter une excursion d'une voie de circulation si l'enveloppe d'alerte (courante) touche un bord de la voie de circulation.

Avantageusement, l'étape de traitement de données détermine, pour chacun des trains d'atterrissage de l'aéronef, une pluralité d'enveloppes d'alerte (courantes) différentes dont chacune dépend d'une durée dite d'excursion particulière.

En outre, de façon avantageuse, l'étape d'aide à l'évitement est mise en oeuvre au moins pour émettre (dans le poste de pilotage de l'aéronef) au moins l'un des messages suivants : un message d'alerte, un message d'aide à la navigation au sol, ledit message étant émis sous au moins l'une des formes suivantes : visuelle, sonore.

De plus, avantageusement, l'étape d'aide à l'évitement est mise en oeuvre pour générer automatiquement un freinage de l'aéronef, en cas d'absence d'action appropriée du pilote après l'émission d'au moins un message.

La présente invention concerne également un système d'aide à l'évitement d'une excursion (longitudinale ou latérale) d'une voie de circulation d'un aérodrome par un aéronef roulant sur la voie de circulation.

Selon l'invention, ledit système (destiné à être monté sur un aéronef) comporte au moins :
- une unité de surveillance configurée pour surveiller l'aérodrome de manière à pouvoir détecter par l'intermédiaire au moins d'une détection optique au moins un élément caractéristique d'une voie de circulation donnée, pour déterminer une position relative courante d'au moins un train d'atterrissage de l'aéronef par rapport à l'élément caractéristique détecté, et pour détecter une excursion future de ladite voie de circulation de l'aérodrome par l'aéronef en fonction au moins de cette position relative courante et de paramètres de l'aéronef ; et
- au moins une unité d'aide à l'évitement configurée pour, dans le cas d'une excursion future détectée par l'unité de surveillance, mettre en oeuvre au moins une action destinée à aider à éviter (empêcher) ladite excursion future.

La présente invention concerne également un aéronef, en particulier un avion de transport, qui comporte au moins un système d'aide à l'évitement d'une excursion d'une voie de circulation, tel que celui décrit ci-dessus.

### Brève description des figures

Les figures annexées feront bien comprendre comment l'invention peut être réalisée. Sur ces figures, des références identiques désignent des éléments semblables.
La figure 1 est un schéma synoptique d'un système d'aide à l'évitement d'une excursion d'une voie de circulation, selon un mode de réalisation particulier de l'invention.
La figure 2 est une vue schématique, en perspective, d'une partie d'un aérodrome sur lequel circule, pendant une phase de roulement, un aéronef équipé d'un système d'aide à l'évitement d'une excursion d'une voie de circulation.
La figure 3 illustre schématiquement les étapes principales d'un procédé d'aide à l'évitement d'une excursion d'une voie de circulation, selon un mode de réalisation particulier de l'invention.
La figure 4 est une vue schématique d'un aéronef vu de dessus, par rapport auquel on a représenté différentes enveloppes dites d'alerte. La figure 5 est une vue schématique d'un aéronef vu partiellement de dessus, dans une phase de stationnement.

### Description détaillée

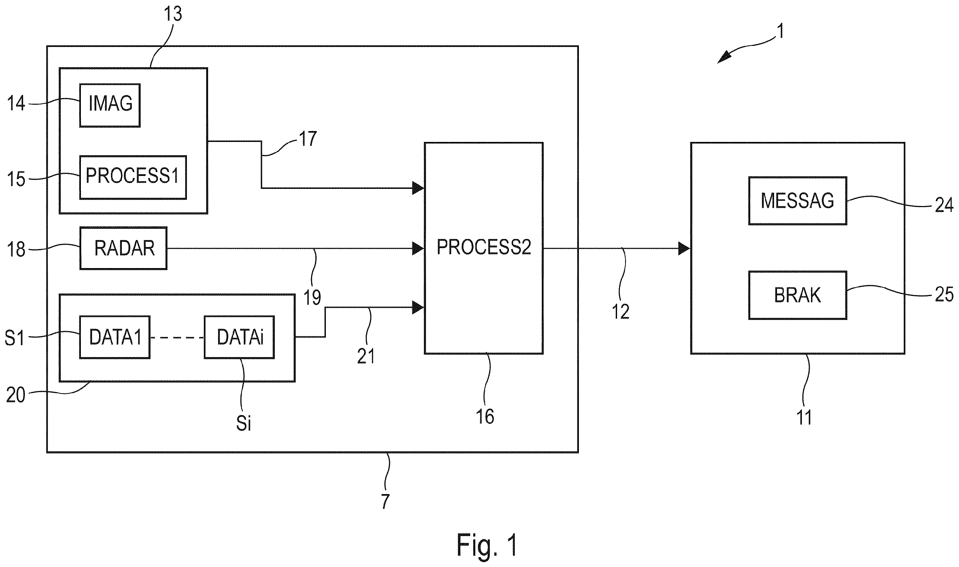

Le système 1, représenté schématiquement sur la figure 1 et permettant d'illustrer l'invention, est destiné à équiper un aéronef AC, en particulier un avion de transport.

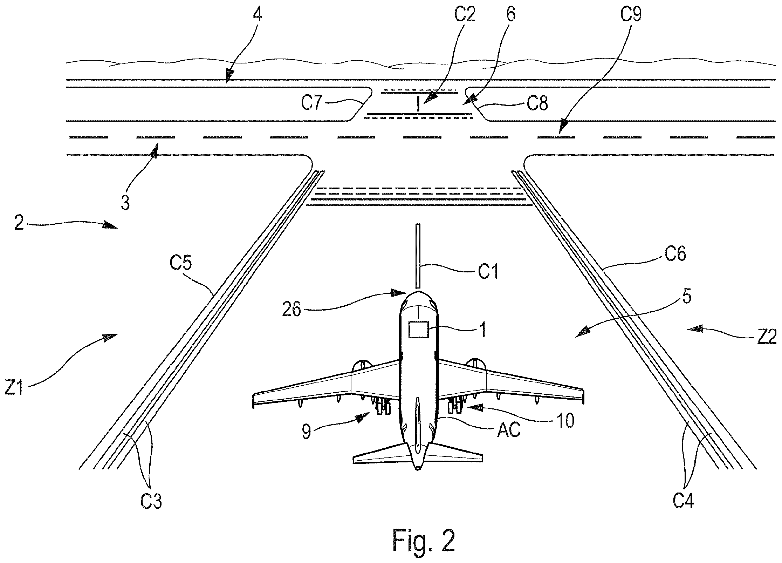

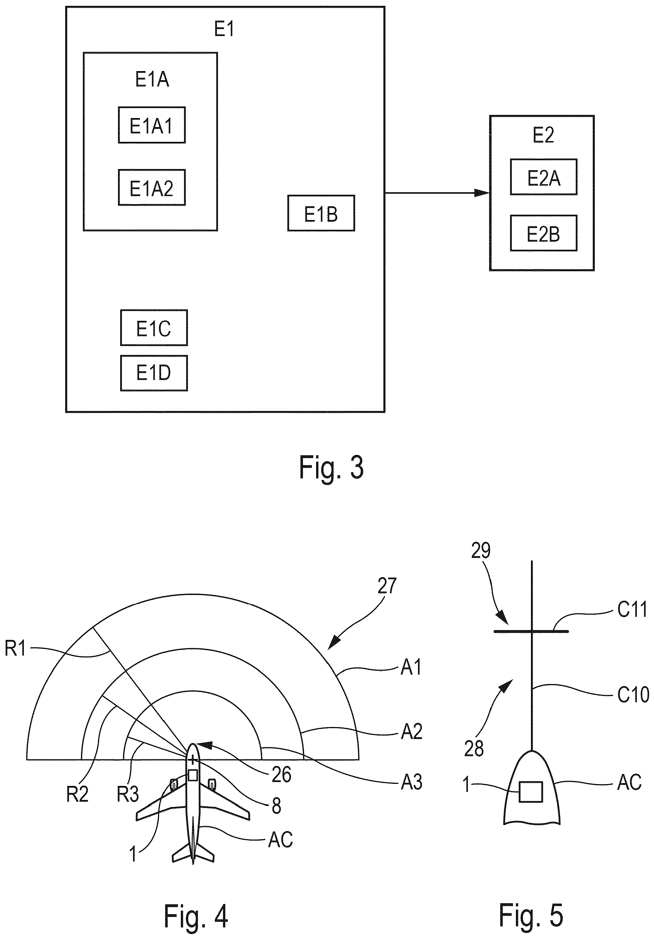

Ce système 1 (qui est embarqué sur l'aéronef AC, comme représenté très schématiquement sur la figure 2 et la figure 4) est destiné à aider l'aéronef AC, notamment lorsqu'il roule sur une voie de circulation d'un aérodrome 2, comme dans l'exemple de la figure 2.

Dans le cadre de la présente invention, une voie de circulation d'un aérodrome 2 correspond, comme représenté sur la figure 2 :
- soit à une piste 3, 4 (« runway » en anglais) qui est destinée au décollage et/ou à l'atterrissage des aéronefs ;
- soit à une voie de roulement 5, 6 (« taxiway » en anglais) qui permet à un aéronef de circuler sur l'aérodrome 2 notamment pour faire le trajet (en roulant sur le sol) entre une piste 3, 4 utilisée pour le décollage ou l'atterrissage et une zone de stationnement (non représentée).

Sur l'exemple de la figure 2, l'aéronef AC roule sur la voie de roulement 5 à destination de la piste 3. La voie de roulement 5 est pourvue d'une ligne centrale C1 (ou axe central), par exemple en jaune, et elle est délimitée latéralement, de part et d'autre, par des lignes C3 et C4 doubles de bord de voie, par exemple également en jaune. Sur la figure 2, on a également représenté une ligne centrale C2 de la voie de roulement 6 et une ligne centrale C9 de la piste 3.

Le système 1 est destiné à aider l'aéronef AC à éviter une excursion de la voie de circulation utilisée. Le système 1 considère que l'aéronef AC risque une excursion si sa trajectoire s'approche trop d'une ligne de bord (telle que les lignes C3 ou C4 par exemple) ou s'éloigne trop d'une ligne centrale (telle que la ligne C1 par exemple). Une telle excursion (en plus d'être, généralement, problématique et dangereuse pour le roulement de l'aéronef) exposerait l'aéronef à des risques de collisions, notamment avec d'autres aéronefs, des véhicules, des équipements au sol ou des infrastructures aéroportuaires, et/ou pourrait générer des dommages sur l'aéronef et/ou des perturbations de l'opération que l'aéronef est en train de réaliser.

Pour la détermination d'une excursion, si on prend en compte l'éloignement de l'aéronef par rapport à la ligne centrale, il est nécessaire de connaître la largeur de la voie de circulation utilisée pour pouvoir déterminer si, par cet éloignement de la ligne centrale, l'aéronef s'approche trop d'une des lignes de bord.

Le système 1 est actif sur l'aéronef AC :
- pendant une phase de roulement au sol (« taxiing ») de l'aéronef, comme dans l'exemple de la figure 2, pour laquelle une excursion correspond à une sortie de l'aire (de la piste 3, 4 ou de la voie de roulement 5, 6) pourvue d'un revêtement sur laquelle il roule, et ceci en s'écartant latéralement (excursion latérale) ou en dépassant longitudinalement l'aire (excursion longitudinale) ; et/ou
- pendant une phase de stationnement (« parking ») de l'aéronef AC, pour laquelle une excursion correspond à un éloignement excessif d'une ligne centrale (ou axe central) usuelle d'une voie ou aire de stationnement ou d'un marquage d'arrêt qui représente un marquage usuel au sol au niveau duquel doit être positionné un élément de l'aéronef, par exemple son train d'atterrissage avant lorsque l'aéronef est dans une position (définitive) de stationnement, comme précisé ci-dessous en référence à la figure 5.

Le système 1 n'est pas actif et n'est pas destiné à détecter une excursion d'une voie de circulation, pendant les autres phases de vol (par exemple au décollage ou à l'atterrissage).

Ledit système 1 comporte, comme représenté sur la figure 1 :
- une unité de surveillance 7 configurée :
   - pour surveiller l'aérodrome 2 de manière à pouvoir détecter, en particulier par l'intermédiaire d'une détection optique (et notamment une détection visuelle), au moins un élément caractéristique Cn (n étant un entier) d'une voie de circulation 3, 4, 5, 6 de l'aérodrome 2 ;
   - pour déterminer une position relative courante d'au moins un train d'atterrissage 8, 9, 10 (figures 2 et 4) de l'aéronef AC par rapport à l'élément caractéristique Cn ainsi détecté ; et
   - pour détecter une excursion future de ladite voie de circulation de l'aérodrome 2 par l'aéronef AC en fonction notamment de cette position relative courante déterminée et de paramètres (notamment la vitesse) de l'aéronef ; et
- au moins une unité d'aide à l'évitement 11 configurée pour, dans le cas d'une excursion future détectée par l'unité de vérification 7 (à laquelle elle est reliée par l'intermédiaire d'une liaison 12), mettre en oeuvre au moins une action destinée à aider à éviter (c'est-à-dire à empêcher) ladite excursion future, comme précisé ci-dessous.

Sur la figure 4, on a représenté de façon schématique par une croix la localisation du train d'atterrissage avant 8 (non visible directement dans cette vue (de dessus) en plan de l'aéronef AC roulant au sol). De plus, les trains d'atterrissage principaux 9 et 10, gauche et droite, sont visibles sur la figure 2 qui est une vue en perspective de l'aérodrome 2.

Par ailleurs, ledit ou lesdits éléments caractéristiques Cn susceptibles d'être détectés par l'unité de surveillance 7 comprennent l'un des éléments suivants :
- une ligne centrale de la voie de circulation, telle que la ligne centrale C1 de la voie de roulement 5, la ligne centrale C9 de la piste 3 et la ligne centrale C2 de la voie de roulement 6, comme représenté sur la figure 2 ;
- une ligne de bord de la voie de circulation, telle que les lignes de bord C3 et C4 de la voie de circulation 5 de la figure 2. Une telle ligne de bord peut ne pas être présente sur certaines voies de circulation ;
- une limite entre une zone (telle que les voies de roulement 5 et 6) pourvue d'un revêtement pour la circulation sur la voie de circulation et une zone (telle que les zones Z1 et Z2 de la figure 2) dépourvue d'un revêtement pour la circulation, telle que par exemple les limites C5 et C6 de la voie de roulement 5 et les limites C7 et C8 de la voie de roulement 6 ;
- une ligne centrale sur une voie de circulation vers une position de stationnement, telle qu'une ligne centrale C10 d'une voie de circulation 28 vers une position de stationnement 29 représentée très schématiquement sur la figure 5 ;
- un marquage d'arrêt (tel qu'un marquage d'arrêt C11 représenté sur la figure 5) qui représente un marquage usuel au sol, par exemple sous forme d'un segment de droite, au niveau duquel doit être positionné un élément de l'aéronef, par exemple son train d'atterrissage avant, lorsque l'aéronef est en position de stationnement (tel que la position de stationnement localisée par une référence 29 sur la figure 5).

Plus précisément, pour éviter une excursion, on tient compte des éléments caractéristiques précités, à savoir pour les exemples particuliers de la figure 2 et de la figure 5 :
- pour la phase de roulement (figure 2), de la trajectoire (c'est-à-dire une suite de positions courantes successives) de l'aéronef AC par rapport à :
   - la limite C5 à C8 entre la zone (voies de roulement 5 et 6) pourvue d'un revêtement pour la circulation sur la voie de circulation et la zone Z1, Z2 dépourvue d'un revêtement pour la circulation ;
   - la ligne centrale C1, C2 de la voie de roulement 5, 6 et les lignes de bord (le cas échéant), lors du roulement sur une voie de roulement 5, 6 ; et
   - la ligne centrale C9 de la piste 3 et les lignes de bord C3 et C4, lors du roulement sur une piste 3 ; et
- pour la phase de stationnement (figure 5), de la trajectoire de l'aéronef AC par rapport à :
   - la ligne centrale C10 de la voie de circulation 28 vers la position de stationnement 29 ; et
   - au marquage d'arrêt C11 à la position de stationnement 29.

Par ailleurs, l'unité de surveillance 7 comprend un système de détection optique 13, de préférence un système de détection visuelle.

Ce système de détection optique 13 comprend, comme représenté sur la figure 1 :
- un dispositif de prise d'images 14 (IMAG pour « Imaging device » en anglais) configuré pour prendre des images de l'environnement extérieur de l'aéronef AC ; et
- un dispositif de traitement d'images 15 (PROCESS1 pour « image Processing device » en anglais) configuré pour traiter au moins certaines des images prises par le dispositif de prise d'images 14 de manière à détecter, le cas échéant, un élément caractéristique Cn (précisé ci-dessous), lorsque cet élément caractéristique Cn est représenté sur au moins l'une des images traitées (c'est-à-dire dont une représentation se retrouve sur l'image).

De préférence, le dispositif de prise d'images 14 prend des images dans le visible et le système de 13 correspond alors à un système de détection visuelle. En variante, il peut également prendre des images à partir de rayonnements présentant d'autres longueurs d'onde, par exemple dans l'infrarouge.

En outre, le dispositif de traitement d'images 15 met en oeuvre au moins l'une des techniques suivantes, précisées ci-après :
- une technique utilisant de l'intelligence artificielle ;
- une technique de traitement d'images.

Par ailleurs, l'unité de surveillance 9 comprend également un dispositif de traitement de données 16 (PROCESS2 pour « data Processing device » en anglais) configuré pour réaliser différents traitements et calculs précisés ci-dessous. Le dispositif de traitement de données 16 est relié par l'intermédiaire d'une liaison 17 au système de détection optique 13.

Dans un mode de réalisation particulier, le dispositif de traitement de données 16 est configuré pour déterminer la position relative entre un élément caractéristique, dont la représentation a été détectée dans l'image, et le train d'atterrissage correspondant de l'aéronef, en prenant en compte des caractéristiques (position, orientation, calibrage) du dispositif de prise d'images 14.

En outre, dans un mode de réalisation préféré, l'unité de surveillance 7 comprend un radar 18 relié par l'intermédiaire d'une liaison 19 au dispositif de traitement de données 16 et configuré pour détecter une limite entre une zone pourvue d'un revêtement pour la circulation et une zone dépourvue d'un tel revêtement. Dans ce mode de réalisation préféré, l'unité de surveillance 7 utilise ainsi simplement un radar 18 pour détecter le bord de la voie de circulation (à partir de la détection d'une différence de matériau au sol) afin de déterminer la position de l'aéronef par rapport à ce bord de la voie de circulation utilisée par ledit aéronef.

Par ailleurs, dans un mode de réalisation particulier, l'unité de surveillance 7 comporte également un ensemble 20 de sources d'information S1, ..., Si (DATA1, ..., DATAi pour « Data sources » en anglais), i étant un entier. Cet ensemble 20 comprend au moins l'une des sources d'informations S1 à Si usuelles suivantes, montées sur l'aéronef AC :
- un système de référence inertielle ;
- un système de positionnement par satellites ;
- un odomètre ;
- un tachymètre ;
- un capteur optoélectronique.

De plus, dans ce mode de réalisation particulier, le dispositif de traitement de données 16 (qui est relié par l'intermédiaire d'une liaison 21 à l'ensemble 20) est configuré pour déterminer une position dite absolue de l'aéronef à l'aide d'informations issues d'au moins l'une desdites sources d'informations S1 à Si.

Dans un mode de réalisation particulier, le dispositif de traitement de données 16 détermine une position relative consolidée en utilisant différentes informations de position (position(s) relative(s) et/ou position(s) absolue(s)) reçues des sources d'informations.

Par ailleurs, dans un mode de réalisation particulier, le dispositif de traitement de données 14 est configuré, comme précisé ci-dessous :
- pour déterminer au moins une enveloppe d'alerte courante, représentative d'un temps dit d'excursion, et dépendant au moins de ladite position relative courante d'un train d'atterrissage de l'aéronef AC et de paramètres de l'aéronef ; et
- pour détecter une excursion d'une voie de circulation si l'enveloppe d'alerte courante touche un bord de la voie de circulation empruntée.

Par ailleurs, l'unité d'aide à l'évitement 11 comprend un dispositif d'émission de message 24 (MESSAG pour « Message emitting device » en anglais). Le dispositif d'émission de message 24 est configuré pour émettre dans le poste de pilotage de l'aéronef AC, à destination du ou des pilotes de l'aéronef AC, au moins l'un des messages suivants : un message d'alerte, un message d'aide à la navigation au sol. Le dispositif d'émission de message 24 émet le ou les messages sous forme visuelle et/ou sous forme sonore et/ou sous tout autre forme comme par exemple une stimulation mécanique dans le siège du pilote.

De plus, l'unité d'aide à l'évitement 11 comprend également un dispositif de freinage 25 (BRAK pour « Braking device » en anglais) configuré pour générer automatiquement un freinage de l'aéronef AC, en cas d'absence d'action appropriée du pilote après l'émission d'un message d'alerte par le dispositif d'émission de message 24.

Ainsi, comme cela sera décrit de façon plus détaillée ci-dessous, le système 1 est en mesure, pendant la phase de roulement au sol et/ou pendant la phase de stationnement, d'une part de détecter une excursion future (longitudinale ou latérale), c'est-à-dire une excursion potentielle, d'une voie de circulation d'un aérodrome, par l'aéronef sur lequel est mis en oeuvre ledit procédé, et d'autre part d'apporter une aide au pilote pour éviter l'excursion d'une telle situation, et ceci en particulier, comme également précisé ci-dessous, en améliorant la sensibilisation du pilote concernant la situation effective (par des messages d'alerte ou d'aide à la navigation au sol émis par le dispositif d'émission de message 24) et/ou en apportant une protection ou une sécurité en dernier ressort ou dernier recours (par un freinage automatique mis en oeuvre par le dispositif de freinage 25) notamment en cas d'erreur ou d'incapacité du pilote.

Le système 1, tel que décrit ci-dessus, est destiné à mettre en oeuvre un procédé P d'aide à l'évitement d'une excursion (longitudinale ou latérale) d'une voie de circulation 5 d'un aérodrome 2 par un aéronef AC roulant sur la voie de circulation 5, tel que présenté ci-dessous en référence à la figure 3.

Ledit procédé P comporte les étapes suivantes :
- une étape de surveillance E1, mise en oeuvre par l'unité de surveillance 7, au moins pour surveiller l'aérodrome 2 (figure 2) de manière à pouvoir détecter, en particulier par l'intermédiaire d'une détection optique, au moins un élément caractéristique C1 à C9 d'une voie de circulation donnée, pour déterminer une position relative courante d'au moins un train d'atterrissage 8, 9, 10 de l'aéronef AC par rapport à l'élément caractéristique C1 à C9 détecté, et pour détecter une excursion future de ladite voie de circulation du aérodrome 2 par l'aéronef AC en fonction au moins de cette position relative courante ; et
- une étape d'aide à l'évitement E2, mise en oeuvre par l'unité d'aide à l'évitement 11, au moins pour, dans le cas d'une excursion future détectée à l'étape de surveillance E1, mettre en oeuvre au moins une action destinée à aider à éviter ladite excursion future.

L'étape de surveillance E1 est mise en oeuvre en continu, lorsque le système 1 est actif et le procédé P est mis en oeuvre, et tant que cela reste le cas.

Quant à l'étape d'aide à l'évitement E2, elle est uniquement mise en oeuvre lorsqu'une excursion future a été déduite à l'étape de surveillance E1.

Le système 1 est activé et le procédé P est mis en oeuvre dès que (et uniquement lorsque) l'aéronef AC est dans une phase de roulement au sol (« taxiing ») ou dans une phase de stationnement (« parking »).

Cette activation (du système 1 pour la mise en oeuvre du procédé P) est réalisée automatiquement, le système 1 ayant connaissance de façon automatique et usuelle de la mise en oeuvre d'une phase de roulement ou d'une phase de stationnement. Le système 1 est désactivé à la fin de la phase de roulement et/ou de la phase de stationnement. Cette désactivation est réalisée soit automatiquement, soit manuellement par le pilote en actionnant un élément de désactivation (non représenté) du système 1.

Dans un mode de réalisation préféré, l'étape de surveillance E1 comprend une étape de détection optique E1A. Cette étape de détection optique E1A comprend :
- une sous-étape E1A1 de prise d'images, mise en oeuvre par le dispositif de prise d'images 14, pour prendre des images de l'environnement extérieur de l'aéronef AC ; et
- une sous-étape E1A2 de traitement d'images, mise en oeuvre par le dispositif de traitement d'image 15, pour traiter au moins certaines des images prises à ladite sous-étape E1A1 de prise d'images de manière à détecter le cas échéant un élément caractéristique Cn, lorsque cet élément caractéristique est représenté sur au moins l'une des images traitées.

L'étape de détection optique E1A est mise en oeuvre pour détecter tous les éléments caractéristiques (visuels) qui sont susceptibles d'être pris en compte pour la mise en oeuvre de l'étape de surveillance E1, que ce soit :
- pendant la phase de roulement, avec les éléments caractéristiques (tels que par exemple les éléments caractéristiques C1 à C9 précités) pris en compte dans cette phase de roulement ; ou
- pendant la phase de stationnement, avec les éléments caractéristiques (tels que par exemple les éléments caractéristiques C10 et C11 précités) pris en compte dans cette phase de stationnement.

Pour mettre en oeuvre cette détection optique, l'aéronef AC est équipé d'un ou de plusieurs dispositifs de prise d'images 14, à savoir de préférence des caméras, pour prendre (ou capturer) les images de l'environnement extérieur (à la sous-étape E1A1 de prise d'images) pendant le roulement de l'aéronef AC et fournir au dispositif de traitement d'images 15 les images capturées.

Les caméras peuvent être agencées à divers endroits sur l'aéronef AC où elles capturent la scène devant l'aéronef AC avec un champ de vision suffisant pour détecter les éléments caractéristiques Cn, quelle que soit la trajectoire de l'aéronef AC.

De préférence, les emplacements les plus appropriés sont le carénage ventral (non visible sur les figures) de l'aéronef AC, le nez 26 (figure 2) de l'aéronef AC et les côtés du fuselage de l'aéronef AC.

Dans une première variante de réalisation, la sous-étape E1A2 de traitement d'images met en oeuvre une technique utilisant de l'intelligence artificielle.

Dans cette première variante, un ou plusieurs algorithmes d'intelligence artificielle intégrés dans le dispositif de traitement d'images 15 utilisent une image comme entrée, et le cas échéant détectent et localisent une représentation de l'élément caractéristique dans l'image. Différentes approches d'intelligence artificielle peuvent être utilisées, y compris des techniques d'apprentissage automatique (« machine learning » en anglais) et/ou d'apprentissage profond (« deep learning » en anglais).

Dans un mode de réalisation préféré, dans lequel le dispositif de traitement d'images 15 est basé sur de l'intelligence artificielle utilisant un système d'apprentissage automatique (« machine learning »), le système d'apprentissage automatique utilise, pour l'apprentissage, des données collectées préalablement qui sont représentatives de situations variées et conformes à celles qui peuvent être rencontrées par un aéronef circulant sur un aérodrome. Pour ce faire, des caméras sont installées sur un ou plusieurs aéronefs. Ces caméras sont identiques à celles utilisées par le système 1 ou tout au moins présentent des caractéristiques techniques proches de celles utilisées par le système 1. De plus, ces caméras sont installées sur cet aéronef ou ces aéronefs aux mêmes emplacements, ou à des emplacements aussi proches que possible, que ceux des caméras du système 1. Des images sont prises lors du roulement sur des aérodromes de l'aéronef ou des aéronefs, ainsi équipés, et les images prises sont stockées. L'ensemble des images stockées sont ensuite collectées. Les prises d'images sont réalisées sur des aérodromes différents, pour des conditions de luminosité différentes et variées (par exemple le jour, la nuit, ...) et des conditions météorologiques différentes et variées (par exemple par temps de soleil, de pluie, de neige, ...) de manière à prendre en compte l'ensemble des principales situations et conditions susceptibles d'être rencontrées par un aéronef équipé du système 1. L'ensemble des images ainsi collectées sont utilisées par le système d'apprentissage de l'intelligence artificielle du dispositif de traitement d'images 15.

Différentes techniques de traitement à base d'intelligence artificielle peuvent fournir les informations recherchées. On peut citer, à titre d'illustration :
- une détection d'objet. Dans ce cas, si un élément caractéristique est représenté dans l'image, l'algorithme d'intelligence artificielle le détecte et le localise spatialement dans l'image. Ces opérations peuvent peut être réalisées en tenant compte notamment de la géométrie, la couleur, la symétrie, ..., avec des algorithmes d'apprentissage usuels et automatiques, ou être mises en oeuvre complètement par un algorithme d'apprentissage profond qui est préalablement entraîné afin de trouver les meilleures caractéristiques pour détecter les objets ;
- une segmentation de l'image. Dans ce cas, chaque pixel de l'image est classé comme faisant partie ou non d'un élément caractéristique, et si un élément caractéristique est représenté dans l'image, l'ensemble des pixels relatifs à cet élément caractéristique permettent de le détecter et le localiser.

Dans une deuxième variante de réalisation, la sous-étape E1A2 de traitement d'images met en oeuvre une technique de traitement d'images.

On sait que les techniques de traitement d'images traitent les pixels de l'image, en utilisant des filtres et des techniques usuelles de traitement du signal, pour récupérer des points d'intérêt et des informations géométriques dans l'image afin de vérifier si un élément caractéristique est représenté dans l'image, et le cas échéant le localiser spatialement dans l'image.

En connaissant ainsi la position de la représentation de l'élément caractéristique Cn dans l'image (grâce au traitement d'image mis en oeuvre à la sous-étape E1A2 de traitement d'images), et en prenant en compte des caractéristiques de calibration du dispositif de prise d'images 14, notamment une caméra, utilisé pour capturer l'image traitée, le système 1 et par exemple le dispositif de traitement de données 16 sont en mesure de déterminer, de façon usuelle, à une étape de traitement de données E1B, la position relative courante d'un train d'atterrissage 8, 9, 10 de l'aéronef AC par rapport à l'élément caractéristique détecté. Comme caractéristiques de calibration du dispositif de prise d'images 21, le système 1 utilise en particulier la position et l'orientation du dispositif de prise d'images 14 sur l'aéronef (notamment par rapport au train d'atterrissage considéré) ainsi que des paramètres de prise d'images (ouverture, résolution, ...) du dispositif de prise d'images 14.

En outre, dans une troisième variante de réalisation, la sous-étape E1A2 de traitement d'images met en oeuvre, à la fois, une technique (telle que celle décrite ci-dessus) utilisant de l'intelligence artificielle et une technique de traitement d'images (telle que celle également décrite ci-dessus).

A chaque instant de prise d'image considéré, la ou les caméras prennent une nouvelle image qui est ensuite traitée. Ainsi, une trajectoire de l'aéronef est obtenue par la prise en compte des positions successives de l'aéronef par rapport à l'élément caractéristique.

Par ailleurs, l'étape de surveillance E1 comprend l'étape de traitement de données E1B mise en oeuvre par le dispositif de traitement de données 16.

Dans un mode de réalisation préféré, l'étape de surveillance E1 comprend également une étape de détection E1C consistant à détecter, à l'aide du radar 18, une limite C5, C6 (figure 2) entre une zone pourvue d'un revêtement pour la circulation de la voie de circulation utilisée (par exemple la voie de roulement 5 dans l'exemple de la figure 2) et une zone Z1, Z2 dépourvue d'un revêtement pour la circulation, et à déterminer la position relative de cette limite C5, C6 par rapport à l'aéronef AC et notamment par rapport à un train d'atterrissage 8, 9, 10 de l'aéronef AC. Cette information de position relative est reçue (via la liaison 19) et est utilisée par le dispositif de traitement de données 16, à l'étape de traitement de données E1B, pour déterminer la position relative courante de l'aéronef. Cette information de position relative peut également être utilisée par le dispositif de traitement de données 16, à l'étape de traitement de données E1B, en complément des informations obtenues par la détection optique, pour générer une position relative courante consolidée, ce qui permet d'augmenter la précision de la position relative courante consolidée.

En outre, dans un mode de réalisation particulier, l'étape de surveillance E1 comprend une étape de mesure E1D, mise en oeuvre par l'une ou plusieurs des sources d'informations de l'ensemble 20, consistant à mesurer des informations permettant de déterminer une position dite absolue de l'aéronef AC (c'est-à-dire une position sur l'aérodrome 2, clairement définie, en tant que telle). De plus, dans ce mode de réalisation particulier, l'étape de traitement de données E1B détermine la position absolue de l'aéronef AC à l'aide des mesures réalisées à l'étape de mesure E1C.

Par ailleurs, dans un mode de réalisation préféré, l'étape de traitement de données E1B détermine une position relative consolidée d'un train d'atterrissage 8, 9, 10 de l'aéronef AC, en utilisant différentes informations de position, des positions relatives et/ou des positions absolues, qui ont été obtenues de la manière décrite ci-dessus. Une telle position relative courante consolidée (utilisée pour détecter une excursion) est particulièrement précise.

L'étape de traitement de données E1B, mise en oeuvre par le dispositif de traitement de données 16, consiste également :
- à déterminer au moins une enveloppe d'alerte courante A1, A2, A3 (figure 4) précisée ci-dessous, dépendant au moins d'une position relative d'un train d'atterrissage 8, 9, 10 particulier de l'aéronef AC et de paramètres de l'aéronef AC ; et
- à détecter une excursion d'une voie de circulation si l'enveloppe d'alerte courante A1, A2, A3 touche un bord de la voie de circulation empruntée.

L'étape de traitement de données E1B considère que l'aéronef AC est menacé par une excursion si sa trajectoire est prévue pour sortir sans revenir dans la zone pourvue d'un revêtement.

Le calcul des limites peut inclure des marges supplémentaires. En effet, dans des cas particuliers d'utilisation, tels que des virages ou des demi-tours, il peut arriver qu'une roue d'un train d'atterrissage 8, 9, 10 de l'aéronef AC roule temporairement sur une zone dépourvue de revêtement.

L'étape de traitement de données E1B détermine, pour chacun des trains d'atterrissage 8, 9, 10 de l'aéronef AC, au moins une enveloppe d'alerte courante et de préférence une pluralité d'enveloppes d'alerte courantes différentes, dont chacune dépend d'une durée dite d'excursion particulière.

Dans un mode de réalisation particulier, trois niveaux d'alerte sont prévus, à savoir dans l'ordre de déclenchement de l'alerte en cas de survenue d'une excursion de la voie de circulation :
- une indication (« advisory » en anglais) qui est optionnelle ;
- un avertissement (« caution » en anglais) ; et
- une alarme (« warning » en anglais).

Une enveloppe d'alerte (ou de sécurité) A1, A2, A3 est déterminée pour chacun des niveaux d'alerte considérés. Plus précisément, dans le mode de réalisation particulier précité, comme représenté sur la figure 4 :
- l'enveloppe d'alerte A1 est déterminée pour l'indication ;
- l'enveloppe d'alerte A2 est déterminée pour l'avertissement ; et
- l'enveloppe d'alerte A3 est déterminée pour l'alarme.

Dans un mode de réalisation préféré, représenté sur la figure 4, on a représenté un ensemble 27 d'enveloppes d'alerte A1, A2, A3, associé au train d'atterrissage avant 8 de l'aéronef AC. Chaque enveloppe d'alerte A1, A2, A3 correspond à un demi-cercle projeté sur le sol, à l'avant de l'aéronef AC. Chaque enveloppe d'alerte A1, A2, A3 est centrée sur le train d'atterrissage avant 8 de l'aéronef AC et présente un rayon R1, R2, R3 particulier. Ce rayon R1, R2, R3 représente la distance relative entre le train d'atterrissage avant 8 de l'aéronef AC et un élément caractéristique Cn, à partir de laquelle l'alerte correspondante sera déclenchée. De préférence, le système 1 détermine également et utilise également un ensemble d'enveloppes d'alerte (non représenté) pour chacun des trains d'atterrissage principaux 9 et 10 de l'aéronef AC.

Le rayon R1, R2, R3 est calculé en fonction d'un temps dit d'excursion. Le temps d'excursion est un temps prédéterminé. Il correspond à la durée que l'on laisse à l'aéronef AC pour atteindre l'élément caractéristique Cn avant de déclencher l'alerte correspondante. Il varie en fonction du niveau d'alerte. Plus précisément, plus le niveau d'alerte est élevé (c'est-à-dire avec un danger devenant plus imminent), plus le temps d'excursion est faible, comme représenté sur la figure 4 pour les rayons R1, R2 et R3 correspondants. A titre d'illustration non limitative, il peut par exemple être de 3 ou 4 secondes pour le rayon R3, de 5 ou 6 secondes pour le rayon R2, et de 8 à 10 secondes pour le rayon R1.

Le rayon R3 est calculé (par le dispositif de traitement de données 16) en fonction du temps d'excursion prédéterminé correspondant, en prenant en compte les paramètres suivants comprenant des paramètres de l'aéronef AC :
- la position relative du train d'atterrissage 8, 9, 10 considéré de l'aéronef AC ;
- des paramètres (vitesse, capacités de freinage) de l'aéronef AC ; et
- un éventuel ordre de décélération généré sur l'aéronef AC.

Quant aux rayons R2 et R1, ils sont calculés, à partir du rayon R3, en prenant en compte, à chaque fois, un temps prédéterminé correspondant de réaction et de décision du pilote.

Finalement, l'étape d'aide à l'évitement E2, mise en oeuvre par l'unité d'aide à l'évitement 11, réalise (dans le cas d'une excursion future déduite à l'étape de vérification E1) au moins une action destinée à aider à éviter (c'est-à-dire à empêcher) cette excursion future.

Pour ce faire, l'étape d'aide à l'évitement E2 comprend, généralement, tout d'abord, une sous-étape E2A d'émission d'un ou de plusieurs messages à destination du pilote dans le poste de pilotage de l'aéronef AC. Le ou les messages peuvent être un ou des messages d'alerte (alertant le pilote simplement de la situation) et/ou un ou des messages d'aide à la navigation au sol (donnant des indications ou des instructions au pilote pour remédier au risque d'excursion, par exemple en demandant au pilote de réaliser un freinage de l'aéronef AC).

Le dispositif d'émission de message 24 émet ce ou ces messages :
- sous forme visuelle, par exemple en affichant un message ou un signe sur un écran du poste de pilotage, notamment par l'intermédiaire d'un affichage usuel de type « tête haute », ou en émettant un signal lumineux ; et/ou
- sous forme sonore, par exemple à l'aide d'un haut-parleur ou/ou d'une sirène installés dans le poste de pilotage.

Chaque message d'alerte émis dépend du niveau d'alerte considéré, parmi les niveaux d'alerte possibles, et notamment parmi les trois niveaux d'alerte décrits ci-dessus. A titre d'illustration, pour ces trois niveaux d'alerte, le dispositif d'émission de message 24 peut émettre les messages suivants :
- pour une indication (« advisory » en anglais), un message visuel ;
- pour un avertissement (« caution » en anglais), des messages visuels et sonores ; et
- pour une alarme (« warning » en anglais), des messages visuels et sonores. De plus, si nécessaire une sous-étape E2B de freinage automatique est déclenchée.

Cette sous-étape E2B réalise un freinage automatique de l'aéronef, qui est mis en oeuvre par le dispositif de freinage 25. Pour ce faire, dans un mode de réalisation particulier, le dispositif de freinage 25 envoie automatiquement un ordre de freinage à un système de freinage usuel de l'aéronef AC, et ceci de préférence jusqu'à l'arrêt complet de l'aéronef AC.

Par conséquent, si à la suite des alertes d'indication, d'avertissement et d'alarme, le pilote ne prend pas les mesures appropriées, le système 1 déclenche une action de récupération, à savoir un ordre de freinage automatique approprié est calculé et fourni au système de freinage de l'aéronef AC pour l'arrêter et ainsi empêcher une excursion (longitudinale ou latérale) de la voie de circulation empruntée.

Cette sous-étape E2B génère donc automatiquement un freinage de l'aéronef, et ceci en cas d'absence d'action appropriée du pilote après l'émission des messages. Cette sous-étape E2B met en oeuvre une protection en dernier ressort et permet notamment d'éviter les conséquences que pourraient avoir une erreur ou une incapacité du pilote.

Dans un cas particulier, si les conditions nécessaires sont remplies, cette sous-étape E2B peut être mise en oeuvre, même si la sous-étape E2A n'a pas été préalablement mise en oeuvre.

Le système 1 et le procédé P, tels que décrits ci-dessus, présentent de nombreux avantages. En particulier :
- ils sont en mesure de détecter automatiquement une excursion future (ou excursion potentielle) d'une voie de circulation emprunté par l'aéronef AC équipé du système 1 ;
- ils sont en mesure d'apporter une aide au pilote de l'aéronef pour éviter l'excursion dans une telle situation ;
- cette aide consiste, tout d'abord, à sensibiliser le pilote sur la situation effective au moyen d'un ou de plusieurs messages d'alerte et/ou d'aide à la navigation au sol ;
- cette aide permet, notamment, de fournir au pilote un niveau d'alerte pertinent en fonction du temps d'excursion ;
- cette aide comprend également une protection en dernier ressort ou dernier recours (en mettant en oeuvre un freinage automatique) en particulier pour pallier une erreur ou une incapacité du pilote ; et
- les traitements mis en oeuvre, notamment concernant la détection optique, peuvent utiliser des techniques d'intelligence artificielle et sont particulièrement précis.

## Revendications

1. Procédé d'aide à l'évitement d'une excursion d'une voie de circulation d'un aérodrome par un aéronef roulant sur la voie de circulation, ledit procédé comportant au moins les étapes suivantes :
- une étape de surveillance (E1), mise en oeuvre par une unité de surveillance (7), au moins pour surveiller l'aérodrome (2) de manière à pouvoir détecter au moins un élément caractéristique (C1 à C11) d'une voie de circulation (3, 4, 5, 6, 28), pour déterminer une position relative courante d'au moins un train d'atterrissage (8, 9, 10) de l'aéronef (AC) par rapport à l'élément caractéristique (C1 à C11) détecté, et pour détecter une excursion future de ladite voie de circulation (3, 4, 5, 6, 28) de l'aérodrome (2) par l'aéronef (AC) en fonction au moins de cette position relative courante et de paramètres de l'aéronef (AC), ledit ou lesdits éléments caractéristiques comprenant au moins une limite (C5, C6, C7, C8) entre une zone pourvue d'un revêtement pour la circulation sur une voie de circulation (3, 4, 5, 6) et une zone (Z1, Z2) dépourvue d'un revêtement pour la circulation, l'étape de surveillance (E1) utilisant un radar (18) pour détecter la limite (C5, C6, C7, C8) entre la zone pourvue du revêtement pour la circulation sur la voie de circulation (3, 4, 5, 6, 28) et la zone (Z1, Z2) dépourvue d'un revêtement pour la circulation ; et
- une étape d'aide à l'évitement (E2), mise en oeuvre par au moins une unité d'aide à l'évitement (11), au moins pour, dans le cas d'une excursion future détectée à l'étape de surveillance (E1), mettre en oeuvre au moins une action destinée à aider à éviter ladite excursion future.

2. Procédé selon la revendication 1,
**caractérisé en ce que** l'étape de surveillance (E1) met en oeuvre une détection optique et comprend pour la mise en oeuvre de la détection optique :
- une sous-étape (E1A1) de prise d'images, mise en oeuvre par un dispositif de prise d'images (14), pour prendre des images de l'environnement extérieur de l'aéronef (AC) ; et
- une sous-étape (E1A2) de traitement d'au moins certaines des images prises à ladite sous-étape de prise d'images (E1A1) de manière à détecter le cas échéant un élément caractéristique (C1 à C11) d'une voie de circulation (3, 4, 5, 6, 28), lorsque cet élément caractéristique (C1 à C11) est représenté sur au moins l'une des images traitées.

3. Procédé selon la revendication 2,
**caractérisé en ce que** la sous-étape (E1A2) de traitement d'images met en oeuvre au moins l'une des techniques suivantes :
- une technique utilisant de l'intelligence artificielle ;
- une technique de traitement d'images.

4. Procédé selon l'une quelconque des revendications 2 et 3,
**caractérisé en ce que** l'étape de surveillance (E1) comprend une sous-étape (E1B) de traitement de données mise en oeuvre au moins pour déterminer la position relative courante entre un élément caractéristique (C1 à C11), dont la représentation a été détectée dans l'image, et le train d'atterrissage (8, 9, 10) de l'aéronef (AC), en prenant en compte des caractéristiques du dispositif de prise d'images (14) utilisé à la sous-étape (E1A) de prise d'images.

5. Procédé selon l'une quelconque des revendications précédentes,
**caractérisé en ce que** ledit ou lesdits éléments caractéristiques comprennent également au moins l'un des éléments suivants :
- une ligne centrale (C1, C2, C9, C10) d'une voie de circulation (3, 4, 5, 6, 28) ;
- une ligne de bord (C3, C4) d'une voie de circulation (3, 4, 5, 6) ;
- un marquage d'arrêt (C11).

6. Procédé selon l'une quelconque des revendications précédentes,
**caractérisé en ce que** l'étape de surveillance (E1) détermine une position dite absolue de l'aéronef (AC) à l'aide d'informations issues d'au moins l'un des éléments suivants (S1, Si) de l'aéronef (AC) : un système de référence inertielle, un système de positionnement par satellites, un odomètre, un tachymètre, un capteur optoélectronique.

7. Procédé selon l'une quelconque des revendications précédentes,
**caractérisé en ce que** l'étape de surveillance (E1) détermine une position relative courante consolidée d'un train d'atterrissage (8, 9, 10) de l'aéronef (AC), en utilisant au moins deux informations de position.

8. Procédé selon l'une quelconque des revendications précédentes,
**caractérisé en ce que** l'étape de surveillance (E1) comprend une étape de traitement de données (E1B) mise en oeuvre au moins pour déterminer au moins une enveloppe d'alerte courante (A1, A2, A3), correspondant à un temps dit d'excursion et dépendant au moins de ladite position relative courante du train d'atterrissage (8, 9, 10) de l'aéronef (AC) et desdits paramètres de l'aéronef (AC), et pour détecter une excursion d'une voie de circulation si l'enveloppe d'alerte (A1, A2, A3) touche un bord de la voie de circulation (3, 4, 5, 6).

9. Procédé selon la revendication 8,
**caractérisé en ce que** l'étape de traitement de données (E1B) détermine, pour chacun des trains d'atterrissage (8, 9, 10) de l'aéronef (AC), une pluralité d'enveloppes d'alerte courantes (A1, A2, A3) différentes dont chacune dépend d'une durée d'excursion particulière.

10. Procédé selon l'une quelconque des revendications précédentes,
**caractérisé en ce que** l'étape d'aide à l'évitement (E2) est mise en oeuvre au moins pour émettre au moins l'un des messages suivants : un message d'alerte, un message d'aide à la navigation au sol, ledit message étant émis sous au moins l'une des formes suivantes : visuelle, sonore.

11. Procédé selon l'une quelconque des revendications précédentes,
**caractérisé en ce que** l'étape d'aide à l'évitement (E2) est mise en oeuvre au moins pour générer automatiquement un freinage de l'aéronef (AC), au moins en cas d'absence d'action appropriée du pilote après l'émission d'au moins un message.

12. Système d'aide à l'évitement d'une excursion d'une voie de circulation d'un aérodrome par un aéronef roulant sur la voie de circulation, ledit système (1) comportant au moins :
- une unité de surveillance (7) configurée pour surveiller l'aérodrome (2) de manière à pouvoir détecter par l'intermédiaire au moins d'une détection optique au moins un élément caractéristique (C1 à C11) d'une voie de circulation (3, 4, 5, 6, 28), pour déterminer une position relative courante d'au moins un train d'atterrissage (8, 9, 10) de l'aéronef (AC) par rapport à l'élément caractéristique (C1 à C11) détecté, et pour détecter une excursion future de ladite voie de circulation (3, 4, 5, 6, 28) de l'aérodrome (2) par l'aéronef (AC) en fonction au moins de cette position relative courante et de paramètres de l'aéronef (AC), ledit ou lesdits éléments caractéristiques comprenant au moins une limite (C5, C6, C7, C8) entre une zone pourvue d'un revêtement pour la circulation sur une voie de circulation (3, 4, 5, 6) et une zone (Z1, Z2) dépourvue d'un revêtement pour la circulation, l'unité de surveillance (7) comprenant un radar (18) pour détecter la limite (C5, C6, C7, C8) entre la zone pourvue du revêtement pour la circulation sur la voie de circulation (3, 4, 5, 6, 28) et la zone (Z1, Z2) dépourvue d'un revêtement pour la circulation ; et
- au moins une unité d'aide à l'évitement (11) configurée pour, dans le cas d'une excursion future détectée par l'unité de surveillance (7), mettre en oeuvre au moins une action destinée à aider à éviter ladite excursion future.

13. Aéronef,
**caractérisé en ce qu'**il comporte au moins un système (1) selon la revendication 12.
